# EUROPEAN PATENT SPECIFICATION

(11) **EP 2 065 446 B1**
(45) Date of publication and mention of the grant of the patent: **22.12.2010**
(21) Application number: 08168982.0
(22) Date of filing: 13.11.2008
(51) Int. Cl.: C09D 4/00, C08F 2/22, C08F 26/06, C09D 7/12

(54) **Aqueous composition with homopolymer**
Wässrige Zusammensetzung mit Homopolymer
Composition aqueuse avec un homopolymère

(30) Priority: 29.11.2007 US 4756
(43) Date of publication of application: 03.06.2009
(73) Proprietor: Rohm and Haas Company, Philadelphia, PA 19106-2399 (US)
(72) Inventor: Ghosh, Tirthankar, Oreland, PA 19075 (US); Rokowski, Joseph Martin, Barto, PA 19504 (US); Wills, Morris Christopher, Philadelphia, PA 19152 (US)
(74) Representative: Kent, Venetia Katherine

(56) References cited:
- EP-A- 0 979 850
- EP-B1- 0 056 441
- US-B1- 6 469 097

## Description

The present invention relates to a coating composition, more particularly, an aqueous coating composition comprising an aqueous emulsion copolymer (i) and from 0.05 wt% to 20 wt %, based on the weight of solids, of a homopolymer (ii) comprising polymerized units derived from monomer X, wherein monomer X is a polymerizable derivative of a heterocycle selected from imidazole, imidazoline, amidine, pyridine, pyrrole, pyrrolidine, pyrrolidinone, caprolactam, and combinations thereof. The present invention also relates to methods of using the coating composition

Waterborne paints are preferred over solvent-borne paints for environmental reasons. However, these coatings, such as exterior paints, have to satisfy an appropriate balance of properties. Harder coatings often satisfy the requirements of dirt pickup resistance and resistance to block (the tendency of painted surfaces to stick together, i.e. block, when stacked or placed with each other under). However, high Tg polymers that would yield hard coatings fail to film form properly at ambient temperatures, which compromises other critical requirements such as durability and resistance properties. The latter problem has been circumvented to some extent by the use of additives, particularly coalescents, which have the effect of lowering the minimum film forming temperature of the polymer compositions. However, this solution still has some drawbacks: the coalescent diffuses and evaporates from the coating slowly over time, and as such contributes to undesirable organic compounds released into the atmosphere; and moreover, the coalescent contributes to the problem of block until an appreciable amount of the coalescent has left the coating. Further regulations to limit / eliminate the use of volatile organic compounds (VOC) in paints and coatings only shifts the balance toward the use of softer polymer compositions, focusing more attention on the issue of block resistance. The most widely used additives for block resistance are surfactants. However, some of these chemicals are alkyl phenol ethoxylates (APE) and are also targeted to be phased out in the near future due to toxicity concerns. Consequently, there is a need for new environmentally acceptable, cost-effective solutions to the problem of block.

One method for preparing aqueous polymer dispersions based on unsaturated heterocyclic monomers is disclosed in U.S. Patent No. 6,469,097 to Bett et al. Bett et al. disclose aqueous dispersions of water-insoluble polymers obtained from the polymerization of a mixture of monomers comprising: (1) at least one unsaturated heterocyclic monomer (A): (i) comprising at least one nucleophilic hetero atom, and (ii) containing at least one exocyclic ethylenic unsaturation, and (iii) whose heterocycle comprises at least one ethylenic unsaturation; and (2) optionally at least one ethylenically unsaturated functionalized monomer (B) and/or an aromatic monomer containing at least one exocyclic ethylenic unsaturation.

Despite such disclosures concerning water-insoluble polymers comprising unsaturated heterocyclic monomers, the desire to find an environmentally friendly, cost-effective route to improved block resistance for low VOC coatings persists.

The present invention provides a coating composition comprising an aqueous emulsion copolymer (i) and a homopolymer of monomer X (ii), which provides improved block resistance for the coating. Monomer X is a polymerizable derivative of a heterocycle. In a preferred embodiment, the aqueous emulsion copolymer (i) comprises polymerized units derived from monomer X.

This invention provides an aqueous coating composition comprising: i) polymer particles of one or more aqueous emulsion copolymer, and ii) from 0.05 weight % to 20 weight % of a homopolymer comprising polymerized units of a monomer selected from polymerizable derivatives of imidazole, imidazoline, amidine, pyridine, pyrrole, pyrrolidone and caprolactam, where the weight % is based on weight of homopolymer solids to weight of copolymer particle solids; and wherein the aqueous emulsion copolymer (i) comprises polymerized units of a monomer X, wherein monomer X is selected from polymerizable derivatives of imidazole, imidazoline, amidine, pyridine, pyrrole, pyrrolidone, caprolactam, and combinations thereof, and one or more monomers Y, wherein monomer Y is selected from carboxylic acids, carboxylic acid salts, carboxylic acid esters, organosulphuric acids, organosulphuric acid salts, sulphonic acids, sulphonic acid salts, phosphonic acids, phosphonic acid salts, vinyl esters, (meth)acrylamides, C₈-C₂₀ aromatic monomers containing at least one exocyclic ethylenic unsaturation and combinations thereof. In one embodiment, the aqueous emulsion copolymer comprises >5 to 50 wt% of units derived from monomer X and 95 to 50 wt% of units derived from monomer Y. In one embodiment, the aqueous emulsion copolymer is a multistage aqueous emulsion copolymer.

In one embodiment, the composition further comprises a polymerization initiator or the degradation products of the polymerization initiator, wherein the polymerization initiator is selected from 2,2'-Azobis(4-methoxy-2,4-dimethylvaleronitrile); 2,2'-Azobis(2,4-dimethyl-valeronitrile); 2,2'-Azobisisobutyronitrile; 2,2'-Azobis(2-methyl-butyronitrile); 1,1'-Azobis(1-cyclo-hexanecarbonitrile); 2,2'-Azobis(2,4,4-trimethylpentane); 2,2'-Azobis(N,N'-dimethyleneisobutyramidine)dihydrochloride; 2,2'-Azobis(2-amidinopropane) dihydrochloride; 4,4'-Azobis(4-cyanovaleriic acid) and combinations thereof.

In one embodiment, the composition further comprises a chain transfer agent or the degradation products of the chain transfer agent.

In one embodiment, the copolymer has a Tg of -50 to 60°C and the composition is suitable for use when dry as a coating.

The term **"copolymer"** as used herein and in the appended claims refers to polymers polymerized from at least two different monomers.

The term **"homopolymer"** as used herein and in the appended claims refers to polymers polymerized from a single monomer.

The term **"aqueous"** as used herein and in the appended claims means water and mixtures composed substantially of water and water miscible solvents.

The use of the term **"(meth)"** followed by another term such as acrylic, acrylate, acrylamide, etc., as used herein and in the appended claims, refers to, for example, both acrylic and methacrylic; acrylate and methacrylate; acrylamide and methacrylamide; etc.

The glass transition temperature **("Tg")** for the copolymers of the present invention may be measured by differential scanning calorimetry (DSC) taking the mid-point in the heat flow versus temperature transition as the Tg value.

The term **"residual monomer X"** as used herein and in the appended claims means unpolymerized monomer based on the total emulsion. The residual monomer concentration is determined using well known gas chromatography methods.

The composition of this invention is a coating composition comprising an aqueous emulsion copolymer (i) whose polymerized units may comprise one or more monoethylenically unsaturated monomers, in polymerized form. Suitable monoethylenically unsaturated monomers include, for example, (meth)acrylic esters including C₁ to C₄₀ esters of (meth)acrylic acid such as methyl (meth)acrylate, ethyl (meth)acrylate, butyl (meth)acrylate, 2-ethylhexyl (meth)acrylate, decyl (meth)acrylate, lauryl (meth)acrylate, stearyl (meth)acrylate, isobornyl (meth)acrylate; hydroxyalkyl esters of (meth)acrylic acid such as hydroxyethyl (meth)acrylate and hydroxypropyl (meth)acrylate; (meth)acrylamide, propenamide, and dimethylacrylamide; (meth)acrylonitrile; amino-functional and ureido-functional monomers; acid-functional or anionic monomers; monomers bearing acetoacetate-functional groups; α-olefins such as 1-decene; styrene or substituted styrenes; vinyl acetate, vinyl butyrate and other vinyl esters; vinyl monomers such as vinyl chloride, vinyl toluene, and vinyl benzophenone; vinylidene chloride; ethylene, propylene, and butadiene. Preferred are all-acrylic, predominantly acrylic, styrene/acrylic, and vinyl acetate/acrylic copolymers.

"Acid-functional or anionic monomer" refers to ethylenically unsaturated monomers containing acid groups or their salts. Suitable acid groups include monomers containing carboxylic acid groups, sulfur acid groups or their respective anions, and phosphorus-containing acid groups (or their salts). Examples of unsaturated carboxylic acid monomers (or their respective anions) include acrylic acid, methacrylic acid, crotonic acid, itaconic acid, fumaric acid, maleic acid, and mono-ester derivatives of diacids, such as monomethyl itaconate, monomethyl fumarate, and monobutyl fumarate. Also included is maleic anhydride, that is able to function similarly. Examples of monomers containing sulfur acid groups include 2-acrylamido-2-methyl-1-propanesulfonic acid, sulfoethyl (meth)acrylate, sodium styrene sulfonate, and vinyl sulfonic acid. Examples of suitable phosphorus-containing monomers include dihydrogen phosphate esters of an alcohol in which the alcohol also contains a polymerizable vinyl or olefinic group, such as allyl phosphate; mono- or diphosphate of bis(hydroxymethyl) fumarate or itaconate; derivatives of (meth)acrylic acid esters, such as, for example, phosphates of hydroxyalkyl-(meth)acrylate including 2-hydroxyethyl-(meth)acrylate, 3-hydroxypropyl-(meth)acrylates, and the like. Thus, dihydrogen phosphate ester monomers include phosphoalkyl (meth)acrylates, such as 2-phosphoethyl (meth)acrylate, 2-phosphopropyl (meth)acrylate. Phosphoalkyl crotonates, phosphoalkyl maleates, phosphoalkyl fumarates, phosphodialkyl (meth)acrylates, phosphodialkyl crotonates, and allyl phosphate can all be used. Other suitable phosphorus-containing monomers are phosphonate-functional monomers, such as those disclosed in WO 99/25780 A1, and include vinyl phosphonic acid, allyl phosphonic acid, 2-acrylamido-2-methylpropanephosphinic acid, α-phosphonostyrene, and 2-methylacrylamido-2-methylpropanephosphinic acid. Still other suitable phosphorus-containing monomers are 1,2-ethylenically unsaturated (hydroxy)phosphinylalkyl (meth)acrylate monomers, and include (hydroxy)phosphinylmethyl methacrylate. Preferred phosphorus-containing monomers are phosphates of hydroxyalkyl methacrylates, with 2-phosphoethyl (meth)acrylate (PEM) being the most preferred.

In some embodiments of the present invention, the aqueous emulsion copolymer (i) of the present invention further comprises polymerized units derived from a crosslinker. Crosslinkers suitable for use with the present invention include multi-ethylenically unsaturated monomers. In some aspects of these embodiments, the crosslinker derived units are derived from crosslinker selected from 1,2-ethylene glycol dimethacrylate, 1,4-butanediol diacrylate; 1,4-butanediol 1 dimethacrylate; 1,6-hexanediol 1 diacrylate; 1,1,1-trimethylol propane triacrylate; 1,1,1-trimethylo 1 propane trimethacrylate; allyl methacrylate; dially phthalate; divinylbenzene; and N-allyl acrylamide and combinations thereof. In some aspects of these embodiments, the crosslinker derived units are derived from crosslinker selected from 1,1,1-trimethylol propane trimethacrylate. In some aspects of these embodiments, the composition comprises 0.01 to 10 wt% (based on solids) crosslinker. In some aspects of these embodiments, the composition comprises 0.01 to 5 wt% (based on solids) crosslinker, or, alternatively, 0.01 to 1 wt% (based on solids) crosslinker, or, alternatively, 0.01 to 0.1 wt% (based on solids) crosslinker. In some aspects of these embodiments, the multi-ethylenically unsaturated monomers are selected from allyl methacrylate; dially phthalate; 1,4-butylene glycol dimethacrylate; 1,2-ethylene glycol dimethacrylate, 1,6-hexanediol diacrylate; divinyl benzene and combinations thereof.

All of the above monomers, other than monomers X, may be termed monomers Y herein.

The "glass transition temperature" or "Tg" of the copolymer is preferably from -50 to 60[deg.] C, more preferably -10 to 40[deg.] C, most preferably 0 to 30[deg.] C. It is measured by differential scanning calorimetry (DSC). "Tg" is the temperature at or above which a glassy polymer will undergo segmental motion of the polymer chain. To measure the glass transition temperature of a polymer by DSC, the polymer sample is dried, preheated to 120[deg.]C, rapidly cooled to -100[deg.]C, and then heated to 150[deg.]C, at a rate of 20[deg.]C/minute while DSC data are collected. The glass transition temperature for the sample is measured at the midpoint of the inflection using the half-height method.

The coating composition also comprises a homopolymer (ii). The homopolymer is made up of polymerized units of a single monomer selected from polymerizable derivatives of heterocycles selected from imidazole, imidazoline, amidine, pyridine, pyrrole, pyrrolidine, pyrrolidinone and caprolactam. Examples of such monomers include 1-vinylimidazole, vinyl imidazoline, vinyl amidine, 2-vinylpyridine, 4-vinylpyridine, vinyl pyrrole, vinyl pyrrolidine, 1-vinyl-2-pyrrolidinone, and vinyl caprolactam. In some aspects of these embodiments, the monomer is selected from imidazole, pyridine, or derivatives thereof. In some aspects of these embodiments, the monomer is selected from 1-vinylimidazole, 1-vinyl-2-pyrrolidinone, 2-vinylpyridine, or 4-vinylpyridine. In some aspects of these embodiments, the monomer is 1-vinylimidazole. The homopolymer can be added to the coating composition at levels of from 0.05 wt% to 20 wt%, preferably from 0.1 wt% to 10 wt%, and more preferably from 0.1 wt% to 5 wt%, or 0.1 wt% to 1 wt%, based on the weight of the homopolymer solids in relation to the copolymer solids.

Preferably, the aqueous emulsion copolymer (i) and the homopolymer (ii) are prepared separately.

Preferably, the aqueous emulsion copolymer (i) is prepared by emulsion polymerization.

The practice of emulsion polymerization is discussed in detail in D.C. Blackley, Emulsion Polymerization (Wiley, 1975). The practice of emulsion polymerization is also discussed in H. Warson, The Applications of Synthetic Resin Emulsions, Chapter 2 (Ernest Benn Ltd., London 1972). Conventional emulsion polymerization techniques may be used to prepare the aqueous emulsion copolymer of this invention as an aqueous dispersion of polymer particles.

Thus, the ethylenically unsaturated monomers used to form the aqueous emulsion copolymer may be emulsified as known in the art with a stabilizing reagent such as an anionic or nonionic dispersing agent, also referred to as a surfactant. Emulsification of the unsaturated monomers is not required, however. Combinations of anionic and nonionic dispersing agents may also be used. High molecular weight polymers such as hydroxy ethyl cellulose, methyl cellulose, and vinyl alcohol may be used as emulsion stabilizers and protective colloids, as may polyelectrolytes such as polyacrylic acid. Acidic monomers particularly those of low molecular weight, such as acrylic acid and methacrylic acid, are water soluble, and thus may serve as dispersing agents which aid in emulsifying the other monomers used.

Suitable anionic dispersing agents include, but are not limited to, for example, the higher fatty alcohol sulfates, such as sodium lauryl sulfate; alkylaryl sulfonates such as sodium or potassium isopropylbenzene sulfonates; and alkali metal higher alkyl sulfosuccinates, such as sodium octyl sulfosuccinate.

Suitable nonionic dispersing agents include, but are not limited to, alkylphenoxypolyethoxyethanols having alkyl groups of from about 7 to 18 carbon atoms and from about 6 to about 60 oxyethylene units, such as heptylphenoxypolyethoxyethanols, and methyloctyl phenoxypolyethoxyethanols; ethylene oxide derivatives of long chained carboxylic acids; and analogous ethylene oxide condensates of long chained alcohols.

The polymerization process to prepare the aqueous emulsion copolymer may be a thermal or redox type; that is, free radicals may be generated solely by the thermal dissociation of an initiator species, or a redox system may be used. Conventional (thermal) free radical initiators may be used such as, for example, azo compounds, hydrogen peroxide, t-butyl or t-amyl hydroperoxide, and ammonium and/or alkali metal persulfates, typically at a level of 0.01% to 3.0% by weight, based on the weight of total monomer. Alternatively, redox systems using the same initiators (alternatively referred to as "oxidants") coupled with a suitable reductant such as, for example, sodium sulfoxylate formaldehyde, ascorbic acid, or isoascorbic acid, may be used. Redox reactions catalyzing metal salts of iron, copper, manganese, silver, platinum, vanadium, nickel, chromium, palladium, or cobalt may be used.

The polymerization temperature may be from 10°C to 90°C, or more, and may be optimized for the catalyst system employed, as is conventional; preferably, the polymerization temperature is from 80°C to 90°C. Emulsion polymerization may be seeded or unseeded.

A monomer emulsion containing all or some portion of the monomers to be copolymerized may be prepared using the monomers, water, and surfactants. A catalyst solution containing catalyst in water may be separately prepared. The monomer emulsion and catalyst solution may be cofed into the polymerization vessel over the course of the emulsion polymerization. The reaction vessel itself may initially contain water. The reaction vessel may also additionally contain seed emulsion and further may additionally contain an initial charge of the polymerization catalyst. The temperature of the reaction vessel during the emulsion polymerization may be controlled by either cooling to remove heat generated by the polymerization reaction, or by heating the reaction vessel, or a combination as required. Several monomer emulsions may be simultaneously cofed into the reaction vessel. When multiple monomer emulsions are cofed, they may be of different monomer compositions. The sequence and rates at which the different monomer emulsions are cofed may be altered during the emulsion polymerization process. The pH of the contents of the reaction vessel may also be altered during the course of the emulsion polymerization process.

Chain transfer agents such as mercaptans, polymercaptan, polyhalogen, and allyl compounds in the polymerization mixture may be used to moderate the molecular weight of the copolymer. Examples of chain transfer agents which may be used include long chain C₄-C₂₂ linear or branched alkyl mercaptans such as n-dodecyl mercaptan, t-dodecyl mercaptans, alkyl thioglycolates, alkyl mercaptoalkanoates, alcohols such as isopropanol, isobutanol, lauryl alcohol, or t-octyl alcohol, carbon tetrachloride, tetrachloroethylene, tetrabromoethane, and trichlorobromoethane. Generally from 0.05 to 2 weight %, based on the weight of total monomer in the copolymer, may be used. Alternatively, suitable molecular weights may be obtained by increasing the initiator level, or by a combination of increased initiator level and a chain transfer agent.

In one embodiment of the present invention the emulsion copolymer may be prepared by a multistage emulsion polymerization process, in which at least two stages differing in composition are polymerized in sequential fashion. Such a process usually results in the formation of at least two mutually incompatible polymer compositions, thereby resulting in the formation of at least two phases within the polymer particles. Such particles are composed of two or more phases of various geometries or morphologies such as, for example, core/shell or core/sheath particles, core/shell particles with shell phases incompletely encapsulating the core, core/shell particles with a multiplicity of cores, and interpenetrating network particles. In all of these cases the majority of the surface area of the particle will be occupied by at least one outer phase and the interior of the particle will be occupied by at least one inner phase. Each of the stages of the multi-staged emulsion polymer may contain the same monomers, surfactants, chain transfer agents, etc. as disclosed herein-above for the emulsion polymer. The polymerization techniques used to prepare conventional multistage emulsion polymers are well known in the art such as, for example, US Patents No. 4,325,856; 4,654,397; and 4,814,373.

The polymer particles of the aqueous emulsion copolymer may have a particle size of from 20 to 500nm., preferably 20 to 250nm, most preferably 50 to 150nm. The particle size distribution may be unimodal, bimodal, multimodal, or broad. The average particle diameter may be measured by a quasi-elastic light scattering technique, using an instrument such as a Brookhaven Model BI-90 Particle Sizer, supplied by Brookhaven Instruments Corporation, Holtsville, N.Y. Alternatively, for colloids with multi-mode particle size distributions, a particle size analysis method known as capillary hydrodynamic fractionation (CHDF) may be used with an instrument such as the Matec CHDF 2000 (from Matec Applied Sciences, Northborough, MA).

The emulsion copolymer (i) has a weight average molecular weight, M_{w}, in the range 5,000 - 5,000,000 (preferably 10,000 - 1,000,000, and more preferably 20,000 -500,000) as measured by GPC. (Molecular weights are usually represented as unit-less in the art, although these same numbers may be referred to in units of Daltons). If the M_{w} becomes too low, durability upon exterior exposure is compromised. If the M_{w} becomes too high, the abrasive scrub performance is compromised. Chain transfer agents are not essential in the practice of this invention. However, in a preferred embodiment, the copolymer of the invention has a molecular weight of approximately 100,000 -500,000, which molecular weight is more readily accessed using a chain transfer agent, such as n-dodecyl mercaptan (n-DDM).

In a preferred embodiment, the polymerization of the copolymer particles is accomplished using a gradual addition feed process. In this process, a seed polymer is added or formed in situ, and then grown out through the gradual addition of monomer(s). In the case where the seed is formed in situ, a small charge of monomer emulsion to the reactor, typically 3% of the whole monomer emulsion mix, is made and the polymerization is initiated to form a seed. In other cases a fully polymerized particle is added to the reactor of a composition compatible with the monomers to be charged. These are standard emulsion polymerization techniques well known to those skilled in the art.

A photoinitiator may optionally be used in the composition of this invention to enhance dirt resistance, for example, a substituted acetophenone or benzophenone derivative as is taught in U.S. Patent No. 5,162,415.

In forming the homopolymer of the present invention, it is not necessary to emulsify the monomer, since it is a water soluble monomer. In this case, the polymerization proceeds as a solution polymerization in water or aqueous solution. Alternatively, a solution polymerization in organic solvent, such as toluene, can be effected, in which case the homopolymer is precipitated out of solution, since it is not soluble in the organic solvent. In either case, preferably, the initiator used is an azo initiator. Preferably, the polymerization of the homopolymer includes a chain transfer agent, such as n-DDM. The latter can be used in levels of 0.1 wt% to 5 wt%, preferably from 1 wt% to 2 wt%, based on the weight of solids of the homopolymer.

The polymer particles of at least one of the one or more aqueous emulsion copolymer (i) comprises polymerized units of monomer X and monomer Y, wherein monomer X is selected from from polymerizable derivatives of imidazole, imidazoline, amidine, pyridine, pyrrole, pyrrolidone, caprolactam, and combinations thereof. The aqueous emulsion copolymer comprising polymerized units of monomer X may be a minor additive accompanying another aqueous emulsion copolymer, the latter acting as the binder in the coating composition.

In some embodiments of the present invention, at least one of the one or more aqueous emulsion copolymer (i) comprises > 5 wt% of monomer X derived units. In some aspects of these embodiments, the aqueous emulsion copolymer comprises >= 10 wt% of monomer X derived units, or, alternatively, >= 15 wt% of monomer X derived units, or, alternatively, >= 20 wt% of monomer X derived units, or >= 25 wt% of monomer X derived units. In some aspects of these embodiments, the aqueous emulsion copolymer comprises ≥ 27 wt% of monomer X derived units, or ≥ 28 wt% of monomer X derived units, or ≥ 29 wt% of monomer X derived units, or ≥ 30 wt% of monomer X derived units.

In some embodiments of the present invention, there is provided a composition comprising an aqueous emulsion copolymer comprising > 5 to 50 wt% of polymerized units derived from monomer X and 95 to 50 wt% of polymerized units derived from monomer Y. In some aspects of these embodiments, there is provided a composition comprising >5 to 30 wt% of polymerized units derived from monomer X and 95 to 70 wt% of polymerized units derived from monomer Y.

In some embodiments of the present invention, there is provided a composition comprising an aqueous emulsion copolymer comprising ≤ 5 wt% of units derived from ethylenically unsaturated monomer containing an epoxide function. In some aspects of these embodiments, the aqueous emulsion copolymer comprises ≤ 1 wt% of units derived from ethylenically unsaturated monomer containing an epoxide function, or, alternatively, ≤ 0.5 wt% of units derived from ethylenically unsaturated monomer containing an epoxide function, or ≤ 0.1 wt% of units derived from ethylenically unsaturated monomer containing an epoxide function, or ≤ 0.05 wt% of units derived from ethylenically unsaturated monomer containing an epoxide function. In some aspects of these embodiments, the aqueous coating composition does not comprise an emulsion copolymer comprising units derived from ethylenically unsaturated monomer containing an epoxide function.

The monomer X is polymerized with difficulty using conventional techniques, and results in residual monomer levels that are typically, and undesirably, >1500 ppm. Additionally, using conventional techniques, it is difficult to access useful solids content (e.g. > 30% solids) in the emulsion copolymer products comprising monomer X. The method of initiation is important in reducing the residual monomer levels and in achieving useful solids content, with azo initiators being especially preferred. Also, the use of a chain transfer agent, such as n-DDM is preferable in polymerizations with monomer X.

Thus, in some embodiments of the present invention, the composition of the present invention further comprises a polymerization initiator and/or the degradation products of a polymerization initiator. In some aspects of these embodiments, the polymerization initiator is selected from 2,2'-Azobis(4-methoxy-2,4-dimethylvaleronitrile); 2,2'-Azobis(2,4-dimethyl-valeronitrile); 2,2'-Azobisisobutyronitrile; 2,2'-Azobis(2-methyl-butyronitrile); 1,1'-Azobis(1-cyclo-hexanecarbonitrile); 2,2'-Azobis(2,4,4-trimethylpentane); 2,2'-Azobis(N,N'-dimethyleneisobutyramidine)dihydrochloride; 2,2'-Azobis(2-amidinopropane) dihydrochloride; 4,4'-Azobis(4-cyanovaleriic acid) and combinations thereof. In some aspects of these embodiments, the polymerization initiator is selected from 4,4'-azobis(4-cyanovaleric acid) which is commercially available from DuPont under the name VAZO^{®} 68.

In some embodiments of the present invention, the aqueous emulsion copolymer comprises ≤ 1,000 ppm of residual monomer X. In some aspects of these embodiments, the aqueous emulsion copolymer comprises ≤ 900 ppm of residual monomer X, or, alternatively, ≤ 800 ppm of residual monomer X, or ≤ 700 ppm of residual monomer X. In some aspects of these embodiments, the aqueous emulsion copolymer comprises ≤ 600 ppm of residual monomer X, or ≤ 500 ppm of residual monomer X, or ≤ 400 ppm of residual monomer X.

In some embodiments of the present invention, there is provided a composition comprising an emulsion copolymer of the present invention, wherein the composition comprises ≥ 20 wt% solids. In some aspects of these embodiments, the composition comprises ≥ 25 wt% solids. In some aspects of these embodiments, the composition comprises ≥ 30 wt% solids.

In a preferred embodiment, the aqueous coating composition comprises one or more aqueous emulsion copolymer (i) of which at least one emulsion copolymer comprises monomer X at a level of 5 wt% to 40 wt%, preferably approximately 20-30 wt %, based on the weight of solids of the emulsion copolymer comprising monomer X, together with from 0.1 wt% to 5 wt%, preferably approximately 0.2-0.6 wt%, based on the combined weight of solids of the one or more aqueous emulsion copolymer, of a homopolymer (ii) comprising polymerized units derived from monomer X, wherein monomer X is selected from polymerizable derivatives of imidazole, imidazoline, amidine, pyridine, pyrrole, pyrrolidine, pyrrolidinone, caprolactam, and combinations thereof. In some aspects of these embodiments, monomer X is selected from 1-vinylimidazole, 1-vinyl-2-pyrrolidinone, 2-vinylpyridine, 4-vinylpyridine and combinations thereof. In a preferred embodiment, monomer X is 1-vinylimidazole.

In another embodiment, at least one of the one or more aqueous emulsion copolymer (i) is a multistage aqueous emulsion copolymer as described above. In a preferred embodiment, at least one of the multistage emulsion copolymers comprises monomer X. Preferably, monomer X is present in only one stage. Preferably, monomer X is copolymerized in the first stage polymerization. This approach allows for a more cost effective use of monomer X. Moreover, it expands the options for monomer combinations with monomer X, since not all monomers Y are readily polymerizable with monomers X. Instead, difficult monomers Y may be polymerized in a polymer stage that does not comprise monomer X.

In some embodiments of the present invention, at least one stage of the multistage aqueous emulsion copolymer comprises > 5 wt% of monomer X derived units. In some aspects of these embodiments, at least one stage of the multistage aqueous emulsion copolymer comprises ≥ 10 wt% of monomer X derived units, or, alternatively, ≥ 15 wt% of monomer X derived units, or, alternatively, ≥ 20 wt% of monomer X derived units, or ≥ 25 wt% of monomer X derived units. In some aspects of these embodiments, at least one stage of the multistage aqueous emulsion copolymer comprises ≥ 27 wt% of monomer X derived units, or ≥ 28 wt% of monomer X derived units, or ≥ 29 wt% of monomer X derived units, or ≥ 30 wt% of monomer X derived units. Preferably, monomer X is present in only one stage. Preferably, monomer X is copolymerized in the first stage polymerization.

In some embodiments of the present invention, there is provided a composition comprising a multistage aqueous emulsion copolymer comprising > 5 to 50 wt% of polymerized units derived from monomer X and 95 to 50 wt% of polymerized units derived from monomer Y in at least one stage. In some aspects of these embodiments, there is provided a multistage aqueous emulsion copolymer comprising >5 to 30 wt% of polymerized units derived from monomer X and 95 to 70 wt% of polymerized units derived from monomer Y in at least one stage.

In another preferred embodiment, the aqueous coating composition comprises a multistage aqueous emulsion copolymer (i) comprising, in the first (non-seed) stage, monomer X at a level of 5 wt% to 40 wt%, preferably approximately 20-30 wt%, based on the weight of monomers in that stage, together with from 0.1 wt% to 5 wt%, preferably approximately 0.2-0.6 wt%, based on the weight of the multistage aqueous emulsion copolymer, of a homopolymer (ii) comprising polymerized units derived from monomer X, wherein monomer X is selected from polymerizable derivatives of imidazole, imidazoline, amidine, pyridine, pyrrole, pyrrolidine, pyrrolidinone, caprolactam, and combinations thereof. In some aspects of these embodiments, monomer X is selected from 1-vinylimidazole, 1-vinyl-2-pyrrolidinone, 2-vinylpyridine, 4-vinylpyridine and combinations thereof. In a preferred embodiment, monomer X is 1-vinylimidazole. In some preferred embodiments, this multistage aqueous emulsion copolymer comprising monomer X is used as a minor additive in conjunction with another aqueous emulsion copolymer, the latter acting as the binder in the coating composition. The multistage aqueous emulsion copolymer may be present at a level of 1-50 wt%, preferably 1-30 wt%, more preferably 1-15 wt%, based on the combined weight of the aqueous emulsion copolymers. Additionally, the relative proportion of the first stage polymer to the second stage polymer (or further stages) may vary, and may be used to control and optimize the overall level of monomer X in the coating composition.

Other components may be added to the polymer composition of this invention, including without limitation, other polymers such as vinyl acetate polymers, styrene butadiene polymers, acrylic copolymers, and vinyl chloride copolymers; pigments or fillers; surfactants; plasticizers; buffers; neutralizers; humectants; waxes; dyes; pearlescents; adhesion promoters; tackifiers; dispersants; defoamers; leveling agents; optical brighteners; ultraviolet stabilizers such as hindered amine light stabilizers; cosolvents; coalescents; rheology modifiers or thickeners; preservatives; biocides; and antioxidants.

In some embodiments of the present invention, the coating composition has a pH ≥ 6.0. In some aspects of these embodiments, the coating composition has a pH ≥ 7.0, alternatively ≥ 8.0; alternatively ≥ 9.0.

The coating composition of this invention may be applied onto substrates using conventional coating application methods, such as, for example, brushing, rolling, dipping, and spraying methods. Substrates to which the coating composition of this invention may be applied include, for example, timber including but not limited to cedar, pine, teak, oak, maple, and walnut; processed timber including but not limited to medium density fiber board, chip board, laminates, wood/plastic composites; mineral substrates including but not limited to masonry, concrete, stucco, fiber, mortar, cement, cement asbestos, plaster, plasterboard, glazed and unglazed ceramic; metal including but not limited to galvanized iron, galvanized steel, cold rolled steel, Zincalum^{™} metal, Zincalum^{™} II metal, aluminum, wrought iron, drop forged steel, and stainless steel; previously painted or primed surfaces (fresh, aged or weathered) including but not limited to acrylic coatings, vinyl acrylic coatings, styrene acrylic coatings, powder coated surfaces, solvent acrylic coatings, alkyd resin coatings, solvent urethane coatings, and epoxy coatings; synthetic substrates including but not limited to polyvinyl chloride, polyvinylidene chloride, polyethylene, and polypropylene; asphalt; cellulosic substrates such as paper, paperboard, wallpaper, and wallboard; glass; leather; and woven and nonwoven material such as cloth, wool, synthetic and natural fiber, and textiles. The coating composition may be used, for example, as a wood coating, maintenance coating, interior or exterior wall coating, metal primer or coating, traffic paint, leather coating, coil coating, architectural coating, mastic sealant, caulk, board coating, paper coating, ink, flooring coating, and adhesive. Coatings prepared from the polymer composition may be flat coatings, satin coatings, semi-gloss coatings, gloss coatings, primers, textured coatings, and the like. In particular, these coating compositions can be advantageously used in various interior or exterior coatings, including functional, protective, or decorative coatings, since the homopolymer confers much improved block resistance to the coating.

After the coating composition has been applied to a substrate, the coating composition is dried or is allowed to dry to form a film. Heat may be applied to dry the coating composition.

In some embodiments of the present invention, there is provided a method for making an aqueous emulsion copolymer and a coating composition comprising said aqueous emulsion copolymer, the method comprising: providing an aqueous solvent; providing a monomer X; providing a monomer Y; providing a polymerization initiator selected from 2,2'-Azobis(4-methoxy-2,4-dimethylvaleronitrile); 2,2'-Azobis(2,4-dimethyl-valeronitrile); 2,2'-Azobisisobutyronitrile; 2,2'-Azobis(2-methyl-butyronitrile); 1,1'-Azobis(1-cyclo-hexanecarbonitrile); 2,2'-Azobis(2,4,4-trimethylpentane); 2,2'-Azobis(N,N'-dimethyleneisobutyramidine)dihydrochloride; 2,2'-Azobis(2-amidinopropane) dihydrochloride; 4,4'-Azobis(4-cyanovaleriic acid) and combinations thereof; combining the monomer X, the monomer Y, the polymerization initiator and the aqueous solvent forming a reaction mixture; maintaining the pH of the reaction mixture at >= 7; wherein the aqueous emulsion copolymer comprises > 5 wt% of monomer X derived units; wherein monomer X is selected from polymerizable derivatives of imidazole, imidazoline, amidine, pyridine, pyrrole, pyrrolidine, pyrrolidinone, caprolactam, and combinations thereof; wherein monomer Y is selected from carboxylic acids, carboxylic acid salts, carboxylic acid esters, organosulphuric acids, organosulphuric acid salts, sulphonic acids, sulphonic acid salts, phosphonic acids, phosphonic acid salts, vinyl esters, (meth)acrylamides, C8-C20 aromatic monomers containing at least one exocyclic ethylenic unsaturation and combinations thereof; and combining the aqueous emulsion copolymer with an aqueous solution of a homopolymer comprising polymerizable derivatives of polymerizable derivatives of imidazole, imidazoline, amidine, pyridine, pyrrole, pyrrolidone and caprolactam. In some aspects of these embodiments, the polymerization initiator is 4,4'-azobis(4-cyanovaleric acid). In some aspects of these embodiments, the pH of the reaction mixture is maintained at 7-10, alternatively at >= 8, alternatively at 8-10, alternatively at >= 9, alternatively at 9-10. In some aspects of these embodiments, the aqueous emulsion copolymer comprises >= 10 wt%, alternatively >= 15 wt%, alternatively >= 20 wt%, alternatively >= 25 wt%, alternatively >= 27 wt%, alternatively >= 28 wt%, alternatively >= 29 wt%, alternatively >= 30 wt% of monomer X derived units. In some aspects of these embodiments, monomer X is selected from polymerizable derivatives of imidazole, pyridine, derivatives thereof and combinations thereof; alternatively monomer X is selected from 1-vinylimidazole, 1-vinyl-2-pyrrolidinone, 2-vinylpyridine, 4-vinylpyridine and combinations thereof. In some aspects of these embodiments, monomer X is 1-vinylimidazole. In some aspects of these embodiments, monomer Y is selected from carboxylic acids, carboxylic acid esters, (meth)acrylamides, C8-C20 aromatic monomers containing at least one exocyclic ethylenic unsaturation and combinations thereof. In some aspects of these embodiments, monomer Y is selected from acrylic acid, methacrylic acid, itaconic acid, maleic acid, fumaric acid, methyl (meth)acrylate, ethyl (meth)acrylate, propyl (meth)acrylate, isopropyl acrylate, n-butyl (meth)acrylate, isobutyl (meth)acrylate, 2-ethylhexyl (meth)acrylate, decyl (meth)acrylate, lauryl (meth)acrylate, stearyl (meth)acrylate, styrene, vinyltoluene, [alpha]-methylstyrene and combinations thereof. In some aspects of these embodiments, monomer Y is n-butyl (meth)acrylate.

In some embodiments of the present invention, there is provided a method for making an aqueous emulsion copolymer and a coating composition comprising said aqueous emulsion copolymer, the method comprising: providing an aqueous solvent; providing a monomer X; providing a monomer Y; providing a polymerization initiator selected from 2,2'-Azobis(4-methoxy-2,4-dimethylvaleronitrile); 2,2'-Azobis(2,4-dimethyl-valeronitrile); 2,2'-Azobisisobutyronitrile; 2,2'-Azobis(2-methyl-butyronitrile); 1,1'-Azobis(1-cyclo-hexanecarbonitrile); 2,2'-Azobis(2,4,4-trimethylpentane); 2,2'-Azobis(N,N'-dimethyleneisobutyramidine)dihydrochloride; 2,2'-Azobis(2-amidinopropane) dihydrochloride; 4,4'-Azobis(4-cyanovaleriic acid) and combinations thereof; combining the monomer X, the monomer Y, the polymerization initiator and the aqueous solvent forming a reaction mixture; maintaining the pH of the reaction mixture at >= 7; wherein the aqueous emulsion copolymer comprises > 5 wt% of monomer X derived units; wherein the aqueous emulsion copolymer comprises <=1,000 ppm of residual monomer X; wherein monomer X is selected from polymerizable derivatives of imidazole, imidazoline, amidine, pyridine, pyrrole, pyrrolidine, pyrrolidinone, caprolactam, derivatives thereof and combinations thereof; wherein monomer Y is selected from carboxylic acids, carboxylic acid salts, carboxylic acid esters, organosulphuric acids, organosulphuric acid salts, sulphonic acids, sulphonic acid salts, phosphonic acids, phosphonic acid salts, vinyl esters, (meth)acrylamides, C8-C20 aromatic monomers containing at least one exocyclic ethylenic unsaturation and combinations thereof; and combining the aqueous emulsion copolymer with an aqueous solution of a homopolymer comprising polymerizable derivatives of polymerizable derivatives of imidazole, imidazoline, amidine, pyridine, pyrrole, pyrrolidone and caprolactam; with the proviso that the aqueous emulsion copolymer comprises <= 5 wt% of units derived from ethylenically unsaturated monomer containing an epoxide function. In some aspects of these embodiments, the polymerization initiator is 4,4'-azobis(4-cyanovaleric acid)). In some aspects of these embodiments, the pH of the reaction mixture is maintained at 7-10, alternatively at >= 8, alternatively at 8-10, alternatively at >= 9, alternatively at 9-10. In some aspects of these embodiments, the aqueous emulsion copolymer comprises >= 10 wt%, alternatively >= 15 wt%, alternatively >= 20 wt%, alternatively >= 25 wt%, alternatively >= 27 wt%, alternatively >= 28 wt%, alternatively >= 29 wt%, alternatively >= 30 wt% of monomer X derived units. In some aspects of these embodiments, the aqueous emulsion copolymer comprises <= 900 ppm, alternatively <= 800 ppm, alternatively <= 700 ppm, alternatively <= 600 ppm, alternatively <= 500 ppm, alternatively <= 400 ppm of residual monomer X. In some aspects of these embodiments, monomer X is selected from polymerizable derivatives of imidazole, pyridine, and combinations thereof; alternatively monomer X is selected from 1-vinylimidazole, 1-vinyl-2-pyrrolidinone, 2-vinylpyridine, 4-vinylpyridine and combinations thereof. In some aspects of these embodiments, monomer X is 1-vinylimidazole. In some aspects of these embodiments, monomer Y is selected from carboxylic acids, carboxylic acid esters, (meth)acrylamides, C8-C20 aromatic monomers containing at least one exocyclic ethylenic unsaturation and combinations thereof. In some aspects of these embodiments, monomer Y is selected from acrylic acid, methacrylic acid, itaconic acid, maleic acid, fumaric acid, methyl (meth)acrylate, ethyl (meth)acrylate, propyl (meth)acrylate, isopropyl acrylate, n-butyl (meth)acrylate, isobutyl (meth)acrylate, 2-ethylhexyl (meth)acrylate, decyl (meth)acrylate, lauryl (meth)acrylate, stearyl (meth)acrylate, styrene, vinyltoluene, [alpha]-methylstyrene and combinations thereof. In some aspects of these embodiments, monomer Y is n-butyl (meth)acrylate. In some aspects of these embodiments, the aqueous emulsion copolymer comprises <= 1 wt%, alternatively <= 0.5 wt%, alternatively <= 0.1 wt%, alternatively <= 0.05 wt% of units derived from ethylenically unsaturated monomer containing an epoxide function. In some aspects of these embodiments, the aqueous coating composition does not comprise an emulsion copolymer comprising units derived from ethylenically unsaturated monomer containing an epoxide function.

In some embodiments of the present invention, the aqueous emulsion copolymer described in the above method is a multistage aqueous emulsion copolymer comprising monomers X and Y.

In some embodiments of the present invention, the method of making an aqueous emulsion copolymer further comprises adding a chain transfer agent to the reaction mixture.

Some embodiments of the present invention will now be described in detail in the following Examples. All fractions and percentages set forth below in the Examples are by weight unless otherwise specified. The following abbreviations are used in the Examples:

**Nomenclature**

| | |
|---|---|
| BA | butyl acrylate |
| DI | deionized |
| MMA | methyl methacrylate |
| NaPS | sodium persulfate |
| n-DDM | n-dodecyl mercaptan |
| SLS | sodium lauryl sulfate |
| Vazo^{™} 68 | 4,4'-azobis(4-cyanovaleric acid) |
| VI | vinyl imidazole |
| p-VI | Poly(vinyl imidazole) |
| AIBN | 2,2'-azobis[isobutyronitrile] |

| | |
|---|---|
| Vazo^{™} is a trademark of the DuPont Corporation, Wilmington, DE, USA) | |

### Example 1. Preparation of seed latex

### BA/n-DDM = 100/2, (all ratios by weight)

1839.22 g of DI water, 0.63 g of anhydrous sodium sulfate, 0.25 g of acetic acid and 66.04 g of a 28% aqueous solution of SLS were charged to a 5 liter, 4-necked round bottomed flask equipped with a heating mantel, thermocouple, temperature controller, mechanical stirrer and reflux condenser. The reaction mixture was heated to 83 °C. Separately, the initiator solution was prepared by dissolving 4.82 g of NaPS in 83.33 g of DI water. An emulsified monomer mix was prepared with 513.70 g of DI water, 22.01 g of a 28% aqueous solution of SLS, 1225.00 g of BA and 25.00 g of *n*-DDM using a mechanical mixer. With the reaction mixture at 83 °C the NaPS solution was added all at once and then the emulsified monomer mix was fed in over 2 hrs (14.88 g per minute). The temperature was maintained at 83 °C for the entire feed. At the end of the monomer mix feed the reaction was held at 83 °C for 1 hr. The reaction mixture was cooled to 25 °C and then filtered through cheesecloth. No coagulum was retained on the cheesecloth. Residual BA monomer was <50 ppm as determined by gas chromatography. The emulsion polymer particle size was determined by light scattering to be 55 nm. The polymer content of the latex was 32.7% by gravimetry.

### Example 2. Preparation of first stage latex

### Seed//Stage I = 10//90

### BA/n-DDM//BA/VI/n-DDM = 100/2//70/30/2

424.45 g of DI water and 507.95 g of the seed latex from Example 1 were charged to a 5 liter, 4-necked round bottomed flask equipped with a heating mantel, thermocouple, temperature controller, mechanical stirrer and reflux condenser. The reaction mixture was heated to 85 °C. Separately, the initiator solution was prepared by mixing 27.50 g of Vazo^{™} 68 and 215.86 g of 1 N NaOH with 789.05 g of DI water. The Vazo^{™} 68 initiator solution was divided into two halves. To one half, 412.50 g of VI was added. An emulsified monomer mix was prepared with 589.29 of DI water, 98.21 g of a 28% aqueous solution of SLS, 962.50 g of BA and 27.50 g of *n*-DDM using a mechanical mixer. With the reaction being held constant at 85 °C, the emulsified monomer mix was fed (18.64 g/min) simultaneously with the Vazo^{™} 68/VI solution (10.32 g/min) over a period of 90 minutes. At the end of the feeds, the rest of the Vazo^{™} 68 solution was added over 120 minutes (4.30 g/min) with the reaction mixture at 85 °C. The reaction was then held at 85 °C for 2 more hrs. The reaction mixture was then cooled to 25 °C and then filtered through cheesecloth. No coagulum was retained on the cheesecloth. Residual BA and VI monomers were 396 and 258 ppm respectively as determined by gas chromatography. The emulsion polymer particle size was determined by light scattering to be 151 nm. The polymer content of the latex was 39.7% by gravimetry.

### Example 3. Preparation of two stage latex

### Seed//Stage I//Stage II = 5//45//50

### BA/n-DDM//BA/VI/n-DDM//BA/MMA/n-DDM

### 100/2//70/30/2//50/50/2

382.50 g of the first stage latex from Example 2 was charged to a 1 liter, 4-necked round bottomed flask equipped with a heating mantel, thermocouple, temperature controller, mechanical stirrer and reflux condenser. The reaction mixture was heated to 85 °C. Separately, the initiator solution was prepared by mixing 3.00 g of Vazo^{™} 68 and 23.55 g of 1 N NaOH with 86.08 g of DI water. The Vazo^{™} 68 initiator solution was divided into two halves. An emulsified monomer mix was prepared with 125.12 of DI water, 5.36 g of a 28% aqueous solution of SLS, 75 g of BA, 75 g of MMA and 3.00 g of n-DDM using a mechanical mixer. With the reaction being held constant at 85 °C the emulsified monomer mix was fed (3.12 g/min) simultaneously with the first Vazo^{™} 68 solution (0.63 g/min) over a period of 90 minutes. At the end of the feeds the other Vazo^{™} 68 solution was added over 120 minutes (0.47 g/min) with the reaction mixture at 85 °C. The reaction was then held at 85 °C for 2 more hrs. The reaction mixture was then cooled to 25 °C and then filtered through cheesecloth. No coagulum was retained on the cheesecloth. Residual BA and MMA monomers were 1375 and 14 ppm respectively as determined by gas chromatography. The emulsion polymer particle size was determined by light scattering to be 221 nm. The polymer content of the latex was 39.9% by gravimetry.

### Example 4. Preparation of two stage latex

### Seed//Stage I//Stage II=5//45//50

### BA/n-DDM//BA/VI/n-DDM//BA/MMA/n-DDM

### 100/2//70/30/2//20/80/2

382.50 g of the first stage latex from Example 2 was charged to a 1 liter, 4-necked round bottomed flask equipped with a heating mantel, thermocouple, temperature controller, mechanical stirrer and reflux condenser. The reaction mixture was heated to 85 °C. Separately, the initiator solution was prepared by mixing 3.00 g of Vazo^{™} 68 and 23.55 g of 1 N NaOH with 86.08 g of DI water. The Vazo^{™} 68 initiator solution was divided into two halves. An emulsified monomer mix was prepared with 125.12 of DI water, 5.36 g of a 28% aqueous solution of SLS, 30 g of BA, 120 g of MMA and 3.00 g of *n*-DDM using a mechanical mixer. With the reaction being held constant at 85 °C the emulsified monomer mix was fed (3.12 g/min) simultaneously with the first Vazo^{™} 68 solution (0.63 g/min) over a period of 90 minutes. At the end of the feeds the other Vazo^{™} 68 solution was added over 120 minutes (0.47 g/min) with the reaction mixture at 85 °C. The reaction was then held at 85 °C for 2 more hrs. The reaction mixture was then cooled to 25 °C and then filtered through cheesecloth. No coagulum was retained on the cheesecloth. Residual BA and MMA monomers were 619 and 87 ppm respectively as determined by gas chromatography. The emulsion polymer particle size was determined by light scattering to be 191 nm. The polymer content of the latex was 39.8% by gravimetry.

### Example 5. Preparation of two stage latex

### Seed//Stage I//Stage II = 2//18//80

### BA/n-DDM//BA/VI/n-DDM//BA/MMA/n-DDM

### 100/2//70/30/2//50/50/2

159.38 g of the first stage latex from Example 2 was charged to a 1 liter, 4-necked round bottomed flask equipped with a heating mantel, thermocouple, temperature controller, mechanical stirrer and reflux condenser. The reaction mixture was heated to 85 °C. Separately, the initiator solution was prepared by mixing 5.00 g of Vazo^{™} 68 and 39.25 g of 1 N NaOH with 143.47 g of DI water. The Vazo^{™} 68 initiator solution was divided into two halves. An emulsified monomer mix was prepared with 208.54 of DI water, 8.93 g of a 28% aqueous solution of SLS, 125 g of BA, 125 g of MMA and 5.00 g of *n*-DDM using a mechanical mixer. With the reaction being held constant at 85 °C the emulsified monomer mix was fed (5.16 g/min) simultaneously with the first Vazo^{™} 68 solution (1.04 g/min) over a period of 90 minutes. At the end of the feeds the other Vazo^{™} 68 solution was added over 120 minutes (0.78 g/min) with the reaction mixture at 85 °C. The reaction was then held at 85 °C for 2 more hrs. The reaction mixture was then cooled to 25 °C and then filtered through cheesecloth. No coagulum was retained on the cheesecloth. Residual BA and MMA monomers were 1606 and 3 ppm respectively as determined by gas chromatography. The emulsion polymer particle size was determined by light scattering to be 504 nm. The polymer content of the latex was 39.4% by gravimetry.

### Example 6. Preparation of two stage latex

### Seed//Stage I//Stage II = 2//18//80

### BA/n-DDM//BA/VI/n-DDM//MMA/n-DDM

### 100/2//70/30/2//100/2

159.38 g of the first stage latex from Example 2 was charged to a 1 liter, 4-necked round bottomed flask equipped with a heating mantel, thermocouple, temperature controller, mechanical stirrer and reflux condenser. The reaction mixture was heated to 85 °C. Separately, the initiator solution was prepared by mixing 5.00 g of Vazo^{™} 68 and 39.25 g of 1 N NaOH with 143.47 g of DI water. The Vazo^{™} 68 initiator solution was divided into two halves. An emulsified monomer mix was prepared with 208.54 of DI water, 8.93 g of a 28% aqueous solution of SLS, 250 g of MMA and 5.00 g of *n*-DDM using a mechanical mixer. With the reaction being held constant at 85 °C the emulsified monomer mix was fed (5.16 g/min) simultaneously with the first Vazo^{™} 68 solution (1.04 g/min) over a period of 90 minutes. At the end of the feeds the other Vazo^{™} 68 solution was added over 120 minutes (0.78 g/min) with the reaction mixture at 85 °C. The reaction was then held at 85 °C for 2 more hrs. The reaction mixture was then cooled to 25 °C and then filtered through cheesecloth. No coagulum was retained on the cheesecloth. Residual MMA monomer was 291 ppm as determined by gas chromatography. The emulsion polymer particle size was determined by light scattering to be 230 nm. The polymer content of the latex was 39.8% by gravimetry.

### Example 7. Preparation of poly(vinyl imidazole)

### VI = 100

612.00 g of toluene, 150.00 g of vinyl imidazole and 3.00 g of AIBN were charged to a 1 liter, 4-necked round bottomed flask equipped with a heating mantel, thermocouple, temperature controller, mechanical stirrer and reflux condenser. The reaction mixture was heated to 85 °C and held for 4 hours. During the reaction the polymer product precipitated out of solution since it is insoluble in toluene. The final reaction mixture was filtered through filter paper. The filter cake was reslurried in 1000 mL of acetone and then refiltered. Poly(VI) is insoluble in acetone - this step is to remove residual VI monomer. The acetone washing step was repeated 2 more times. The filter cake was then dried at 60 °C in a vacuum oven overnight. The resulting polymer product weight was 132 g and contained 1802 ppm of residual VI monomer.

### Example 8. Preparation of poly(vinyl imidazole)

### VI/n-DDM= 100/2

624.00 g of toluene, 150.00 g of vinyl imidazole, 3.00 g of n-DDM and 3.00 g of AIBN were charged to a 1 liter, 4-necked round bottomed flask equipped with a heating mantel, thermocouple, temperature controller, mechanical stirrer and reflux condenser. The reaction mixture was heated to 85 °C and held for 4 hours. During the reaction the polymer product precipitated out of solution since it is insoluble in toluene. The final reaction mixture was filtered through filter paper. The filter cake was reslurried in 1000 mL of acetone and then refiltered. Poly(VI) is insoluble in acetone - this step is to remove residual VI monomer. The acetone washing step was repeated 2 more times. The filter cake was then dried at 60 °C in a vacuum oven overnight. The resulting polymer product weight was 127 g and contained 1112 ppm of residual VI monomer.

### Example 9. Preparation of poly(vinyl imidazole-co-BA)

### VI/BA/n-DDM= 97/3/2

624.00 g of toluene, 145.5 g of vinyl imidazole, 4.50 g of BA, 3.00 g of n-DDM and 3.00 g of AIBN were charged to a 1 liter, 4-necked round bottomed flask equipped with a heating mantel, thermocouple, temperature controller, mechanical stirrer and reflux condenser. The reaction mixture was heated to 85 °C and held for 4 hours. During the reaction the polymer product precipitated out of solution since it is insoluble in toluene. The final reaction mixture was filtered through filter paper. The filter cake was reslurried in 1000 mL of acetone and then refiltered. Poly(VI) is insoluble in acetone - this step is to remove residual VI monomer. The acetone washing step was repeated 2 more times. The filter cake was then dried at 60 °C in a vacuum oven overnight. The resulting polymer product weight was 136 g and contained 787 ppm of residual VI monomer.

### Example 10. Preparation of poly(vinyl imidazole-co-BA)

### VIBA/n-DDM= 90/10/2

624.00 g of toluene, 135.00 g of vinyl imidazole, 15.00 g of BA, 3.00 g of *n*-DDM and 3.00 g of AIBN were charged to a 1 liter, 4-necked round bottomed flask equipped with a heating mantel, thermocouple, temperature controller, mechanical stirrer and reflux condenser. The reaction mixture was heated to 85 °C and held for 4 hours. During the reaction the polymer product precipitated out of solution since it is insoluble in toluene. The final reaction mixture was filtered through filter paper. The filter cake was reslurried in 1000 mL of acetone and then refiltered. Poly(VI) is insoluble in acetone - this step is to remove residual VI monomer. The acetone washing step was repeated 2 more times. The filter cake was then dried at 60 °C in a vacuum oven overnight. The resulting polymer product weight was 134 g and contained 672 ppm of residual VI monomer.

### Examples for making paints containing vinylimidazole additives

### Example 11. Preparation of master batch of paint (AC-261 based paint with Texanol)

2895.76 g of Ti-pure™ R-746 (DuPont) was charged to a 3 gallons container equipped with mechanical stirrer. 3548.70 g of Rhoplex^{™} AC-261was added to the container with constant stirring. 484.84 g of propylene glycol, 52.96 g of Tamol^{™} 165A, 190.38 g of Texanol™-145, and 16.80 g of Triton^{™} GR-7M were mixed together and the mixture was added to the container followed by 17.84 g of Foamaster^{™} VL, 16.0 g of 28% ammonium hydroxide, 155.19 g of Acrysol^{™} RM-2020NPR, 13.60 Acrysol^{™} RM-8W, and 647.90 g of water. Mixing was continued until the mixture became consistent.

Ti-Pure^{™} is a trademark of Dupont Corporation (Wilmington, DE, USA)
Rhoplex^{™}, Tamol^{™}, Triton^{™}, and Acrysol^{™} are trademarks of Rohm and Haas Co. (Philadelphia, PA, USA)
Texanol^{™} is a trademark of Eastman Chemical Company (Kingsport, TN, USA)
Foamaster^{™} and Foamstar^{™} are trademarks of Fitz Chemical Corporation (Itasca, IL, USA)

### Example 12. Preparation of non-vinylimidazole containing control sample

502.51 g of master paint from example 11 was placed in a 1 quart container equipped with mechanical stirrer. 16.70 g of Rhoplex^{™} AC-261 was added to the container followed by 17.50 g of water. The mixture was stirred until it became consistent.

### Example 13. Preparation of Paint with 2% VI latex from Example 2

502.51 g of master paint from example 11 was placed in a 1 quart container equipped with mechanical stirrer. 11.93 g of Rhoplex^{™} AC-261 was added to the container followed by 7.97 g of Example 2, and 14.30 g of water. The mixture was stirred until it became consistent.

### Example 14. Preparation of Paint with 7% VI latex from Example 2

502.51 g of master paint from example 11 was placed in a 1 quart container equipped with mechanical stirrer. 27.83 g of Example 2 and 6.47 g of water were added to the container and the resulting mixture was stirred until it became consistent.

### Example 15. Preparation of Paint with 0.4% polyvinyl imidazole from Example 8

Dissolve 0.48 g of polyvinyl imidazole in 17.02 g of water. 502.51 g of master paint from example 11 was placed in a 1 quart container equipped with mechanical stirrer. 16.70 g of Rhoplex^{™} AC-261 was added to the container followed by the aqueous pVI solution (Example 8) under constant stirring.

### Example 16. Preparation of Paint with 7% VI containing latex from Example 3

502.51 g of master paint from example 11 was placed in a 1 quart container equipped with mechanical stirrer. 31.50 g of latex from Example 3 and 2.70 g of water were added to the container and the resulting mixture was stirred until it became consistent.

### Example 17. Preparation of Paint with 7% VI latex from Example 3 and 0.4% of polyvinylimidazole from Example 8

Dissolve 0.48 g of polyvinyl imidazole (Example 7) in 2.22 g of water. 502.51 g of master paint from Example 11 was placed in a 1 quart container equipped with mechanical stirrer. 31.50 g of VI latex (Example 3) and the aqueous solution of pVI were added to the container. The resulting mixture was stirred until it became consistent.

### Example 18. Preparing paint films.

8 to 10 ml of the paint was transferred on to the test chart in front of the drawdown bar (3 Mil Bird Film Applicator). Immediately, grasping the drawdown bar with both hands, a smooth film was drawn over the test paint at a rate of about 0.2 ft per sec (5 sec per test chart). The film was allowed to dry overnight in a horizontal position at 25°C and 50%

### Example 19. Measuring Peel Block Resistance.

Films were drawn down as described in Example 18. The films were cured in a constant temperature room (CTR) for a specified period of time depending on the test requirement. Four 1-1/2" x 1-1/2" sections (to run duplicates) of each type of paint film were prepared. The cut sections were placed with the paint surfaces face to face and then placed on a flat metal plate. Each individual specimen was topped with a number 8 rubber stopper, with narrow side down, and a 1000 g. weight was placed on each stopper. It is desirable to rate the block resistance of each paint under 2 sets of conditions. These are for face-to-face contact for: (i) 24 hours at room temperature, and (ii) 30 minutes at 50°C. In all cases, the weights and stoppers were equilibrated under the test conditions. After the test period, the stoppers and weights were removed and the sections separated with slow and steady force at an angle of approximately 180°. The samples were then rated for block resistance on a scale of 0 to 10 as described below:
10 = no tack, perfect
9 = trace tack, excellent
8 = slight tack, very good
7 = slight tack, good
6 = moderate tack, good
5 = moderate tack, fair
4 = severe tack, no seal, fair
3 = 5-25% seal, poor
2 = 25-50% seal, poor
1 = 50-75% seal, poor
0 = complete seal, very poor tack

### Results

**Table 1: Block resistance of AC-261 based paints, with Texanol (10%)**

| | (with Texanol) | | | Peel Block Resistance | | | |
|---|---|---|---|---|---|---|---|
| | | VI Copolymer (7%) | p-VI | RT/1 | day | 50C/30 | min |
| ID | | | | No Heat¹ | Heat² | No Heat¹ | Heat² |
| A | AC261 w Texanol - 145 | None | None | 0 | 5 | 0 | 0 |
| A1 | AC261 with Texanol -145 | None | 0.42% p-VI³ | 0 | 9 | 0 | 0 |
| | | | | | | | |
| B | AC261 with Texanol -145 | 70BA/30 VI | None | 0 | 9.2 | 0 | 0 |
| B1 | AC261 with Texanol -145 | 70BA/30 VI | 0.42% p-VI | 6 | 9.6 | 0 | 1 |
| | | | | | | | |
| C | AC261 w/ Texanol -145 | 50(70BA/30VI)// 50(50 BA/50MMA) | None | 0 | 9.4 | 0 | 0 |
| C1 | AC261 w/ Texanol -145 | 50(70BA/30VI)// 50(50 BA/50MMA) | 0.42% p-VI | 0.5 | 9.8 | 0 | 0 |
| | | | | | | | |
| D | AC261 w/ Texanol -145 | 20(70BA/30VI)// 80(50 BA/50MMA)) | None | 0.5 | 9.3 | 0 | 0 |
| D1 | AC261 w/ Texanol -145 | 20(70BA/30VI)// 80(50 BA/50MMA) | 0.42% p-VI | 5 | 9.3 | 0 | 0 |
| | | | | | | | |
| E | AC261 w/ Texanol -145 | 50(70BA/30VI)// 50(20 BA/80MMA) | None | 0.5 | 9.4 | 0 | 0 |
| E1 | AC261 w/ Texanol -145 | 50(70BA/30VI)// 50(20 BA/80MMA) | 0.42% p-VI | 1 | 9.5 | 0 | 0 |
| | | | | | | | |
| F | AC261 w/ Texanol -145 | 20(70BA/30VI)// 80(100MMA) | None | 0 | 9.4 | 0 | 0 |
| F1 | AC261 w/ Texanol -145 | 20(70BA/30VI)// 80(100MMA) | 0.42% p-VI | 7 | 9.6 | 0 | 0 |

| | | | | | | | |
|---|---|---|---|---|---|---|---|
| ¹Film cured at RT ²Film cured at 60°C for 30 min ³The addition of poly(vinyl imidazole) to AC-261-based paints without any added VI-containing latex results in hazy films with very poor gloss, in contrast to the other samples. | | | | | | | |

In Table 1 (and similarly in the following tables), the VI-containing latex copolymer is added at a level of 7 wt%, based on the weight of VI copolymer solids as a percentage of the combined weight of AC-261 and VI-containing copolymer solids.

The data show that, in every case, addition of the homopolymer, poly(vinyl imidazole), improves the block resistance properties for the room temperature block test.

The test conditions, particularly the hot block test which involves forced contact at 50 C for 30 minutes, are severe compared to every day usage encountered by paints. It should be noted that the commercial binder, Rhoplex^{™} AC-261, in a typical paint formulation suffers moderate tack even in the room temperature block test after the paint has been heat cured to aid in removal of the coalescent (Texanol™-145). In contrast, the inventive samples show good block resistance under the same conditions. Moreover, many of the inventive compositions show significantly improved block even without the heated cure. Although Sample Al shows that some advantage can be obtained by straight addition of poly(vinyl imidazole) into an existing commercial paint, greater improvement in block resistance and paint quality are seen when a VI-containing latex is added in addition to the homopolymer.

**Table 2: Block resistance of AC-261 based paints without Texanol**

| | (Without Texanol) | | | Peel Block Resistance | | | |
|---|---|---|---|---|---|---|---|
| | | VI Copolymer (7%) | p-VI | RT/1 day | | 50C/30 min | |
| | ID | | | No Heat¹ | Heat² | No Heat¹ | Heat² |
| A | AC-261 w/o Texanol | None | None | 1 | 7 | 0 | 2.5 |
| A1 | AC-261 w/o Texanol | None | 0.42% p-VI*³ | 8.0 | 9.8 | 0 | 0 |
| B | AC-261 w/o Texanol | 70 BA/30 VI | None | 9 | 9.5 | 0.5 | 7 |
| B1 | AC-261 w/o Texanol | 70 BA/30 VI | 0.42% p-VI | 9.5 | 9.8 | 1 | 9 |
| C | AC-261 w/o Texanol | 50(70/30)// 50(50 BA/50MMA) | None | 6 | 9.6 | 0 | 2 |
| C1 | AC-261 w/o Texanol | 50(70/30)// 50(50 BA/50MMA | 0.42% p-VI | 9.5 | 9.8 | 0 | 8 |
| D | AC-261 w/o Texanol | 20(70/30)// 80(50 BA/50MMA) | None | 3 | 9.5 | 0 | 0 |
| D1 | AC-261 w/o Texanol | 20(70/30)// 80(50 BA/50MMA | 0.42% p-VI | 9.5 | 9.8 | 1 | 7 |
| E | AC-261 w/o Texanol | 50(70/30)// 50(20 BA/80MMA) | None | 3 | 9.5 | 0 | 0 |
| E1 | AC-261 w/o Texanol | 50(70/30)// 50(20 BA/80MMA) | 0.42% p-VI | 4 | 9.8 | 0 | 7 |
| F | AC-261 w/o Texanol | 20(70/30)// 80(100MMA) | | 2 | 9.5 | 0 | 1 |
| F1 | AC-261 wo Texanol | 20(70/30)// 80(100MMA) | 0.42% p-VI | 9.5 | 9.8 | 1 | 3 |

| | | | | | | | |
|---|---|---|---|---|---|---|---|
| ¹Film cured at RT ²Film cured at 60°C for 30 min *3 The addition of poly(vinyl imidazole) to AC-261-based paints without any added VI-containing latex results in hazy films with very poor gloss, in contrast to the other samples. | | | | | | | |

The test paints without Texanol™-145 perform better in the block resistance tests. Again, the inventive compositions with homopolymer, poly(vinyl imidazole), show significant advantage over the current commercial product. Sample Al shows that some advantage can be obtained by straight addition of poly(vinyl imidazole) into an existing commercial paint; however, greater improvement in block resistance and paint quality are seen when a VI-containing latex is added in addition to the homopolymer.

A similar study was conducted in the context of a low VOC paint composition. This uses a softer base polymer, PolymerA.

**Table 3: MLS-69139 Recipe for master batch low VOC paint formulation**

| Material Name | Pounds |
|---|---|
| **Grind** | |
| Ti-pure^{™} R-746 | 1020.33 |
| water | 100 |
| Tamol^{™} 165A | 17.85 |
| BYK-348 | 3 |
| Foamstar^{™} A-34 | 3 |
| | |

| **Let Down** | |
|---|---|
| PolymerA (45.6%) | 1514.44 |
| Propylene Glycol | 22.50 |
| Texanol^{™} | 22.23 |
| BYK-348 | 3 |
| Foamstar^{™} A-34 | 3 |
| Ammonia (28%) | 1.2 |
| Acrysol^{™} RM-2020NPR/water | 40/35.3 |
| water | 77.5 |
| | 2628.82 |
| | |
| KU: 87 | |

| | |
|---|---|
| Propylene Glycol (Univar, Morrisville, PA, USA) BYK-348 (BYK-Gardner, Columbia, MD, USA) | |

### Example 20. Preparation of master batch of paint, MLS-69139

### (PolymerA based paint with Texanol)

1020.33 g Ti-pure™ R-746 and water were added to a 1-gallon container equipped with a mechanical stirrer. 1514.44 g PolymerA was slowly added to the container with constant stirring and then the rest of the ingredients (Table 3) were added. The viscosity was adjusted to about 85-90 KU using Acrysol^{™} RM-2030NPR.

### B. Preparation of VI polymer-containing paints with PolymerA master batch

### Example 21. Preparation of PolymerA Based Paint with 7% VI Latexes

238.6 g of master batch MLS-69139 (Example 20) was added to a 1-pint container equipped with an overhead mechanical stirrer. The VI polymers and water were added to the master paint with constant stirring. In the table below, the ratio of PolymerA to VI copolymer to VI homopolymer is 93 : 7 : 0.4 (if any).

**Table 4: Composition of PolymerA Based Paints**

| | Post-add to 238.6 g of master batch MLS-69139 | | | |
|---|---|---|---|---|
| | VI copolymer | | VI homopolymer | water |
| | Composition | wt. | wt. | |
| 44A | additional master batch - control | 9.50 | -- | 9.93 |
| 44B | 70 BA/30 VI | 10.82 | -- | 8.61 |
| 44C | 50(70/30)//50(50 BA/50MMA) | 10.82 | -- | 8.61 |
| 44D | 20(70/30)//80(50 BA/50MMA) | 10.82 | -- | 8.61 |
| 44E | 50(70/30)//50(20 BA/80MMA) | 10.82 | -- | 8.61 |
| 44F | 20(70/30)//80(100MMA) | 10.82 | -- | 8.61 |
| | | | | |
| 44A1 | additional master batch - control | 9.50 | 0.26 | 9.67 |
| 44B1 | 70 BA/30 VI | 10.82 | 0.26 | 8.35 |
| 44C1 | 50(70/30)//50(50 BA/50MMA) | 10.82 | 0.26 | 8.35 |
| 44D1 | 20(70/30)//80(50 BA/50MMA) | 10.82 | 0.26 | 8.35 |
| 44E1 | 50(70/30)//50(20 BA/80MMA) | 10.82 | 0.26 | 8.35 |
| 44F1 | 20(70/30)//80(100MMA) | 10.82 | 0.26 | 8.35 |

**Table 5: Block Resistance of PolymerA** based paint, with Texanol (3%)**

| | (with Texanol) | Block Resistance | | | |
|---|---|---|---|---|---|
| | | RT/1 day | | 50 C/l day | |
| | | No Heat¹ | No Heat¹ | No Heat¹ | Heat² |
| 44A | Control (PolymerA) | 0 | 0 | 0 | 0 |
| 44A1 | PolymerA * 0.42% p-VI | 0 | 0 | 0 | 0 |
| | | | | | |
| 44B | 93% PolymerA 7% 70 BA/30 VI | 2 | 7 | 0 | 0 |
| 44B1 | 93% PolymerA 7% 70 BA/30 VI 0.42% p-VI | 6 | 8 | 0 | 0 |
| | | | | | |
| 44E | 93% PolymerA 7% 50(70/30)//50(20 BA/80MMA) | 0 | 6 | 0 | 0 |
| 44E1 | 93% PolymerA 7% 50(70/30)//50(20 BA/80MMA) 0.42% p-VI | 3.5 | 8 | 0 | 0 |

| | | | | | |
|---|---|---|---|---|---|
| ¹Film cured at RT ²Film cured at 60°C for 30 min * The addition of poly(vinyl imidazole) to PolymerA-based paints without any added VI-containing latex results in hazy films with very poor gloss, in contrast to the other samples. ** PolymerA: 22BA/47.25MMA/27EHA/2.5MAA/1.25ureido monomer (45.6% solids) | | | | | |

The data show that a similar advantage is seen for the inventive paints containing the homopolymer, poly(vinyl imidazole), in the context of low VOC paints using binders with softer polymer compositions.

## Claims

1. An aqueous coating composition comprising:
i) polymer particles of one or more aqueous emulsion copolymer, and
ii) from 0.05 weight % to 20 weight % of a homopolymer comprising polymerized units of a monomer selected from polymerizable derivatives of imidazole, imidazoline, amidine, pyridine, pyrrole, pyrrolidone and caprolactam, where the weight % is based on weight of homopolymer solids to weight of copolymer particle solids; and wherein the aqueous emulsion copolymer (i) comprises polymerized units of a monomer X, wherein monomer X is selected from polymerizable derivatives of imidazole, imidazoline, amidine, pyridine, pyrrole, pyrrolidone, caprolactam, and combinations thereof, and one or more monomers Y,
wherein monomer Y is selected from carboxylic acids, carboxylic acid salts, carboxylic acid esters, organosulphuric acids, organosulphuric acid salts, sulphonic acids, sulphonic acid salts, phosphonic acids, phosphonic acid salts, vinyl esters, (meth)acrylamides, C₈-C₂₀ aromatic monomers containing at least one exocyclic ethylenic unsaturation and combinations thereof.

2. The composition of claim 1, wherein the composition has a pH >= 7.

3. The composition of claim 1, wherein the aqueous emulsion copolymer comprises >5 to 50 wt% of units derived from monomer X and 95 to 50 wt% of units derived from monomer Y.

4. The composition of claim 1, wherein the composition further comprises a crosslinker.

5. The composition of claim 1, wherein the composition further comprises a polymerization initiator or the degradation products of the polymerization initiator, wherein the polymerization initiator is selected from 2,2'-Azobis(4-methoxy-2,4-dimethylvaleronitrile); 2,2'-Azobis(2,4-dimethyl-valeronitrile); 2,2'-Azobisisobutyronitrile; 2,2'-Azobis(2-methyl-butyronitrile); 1,1'-Azobis(1-cyclo-hexanecarbonitrile); 2,2'-Azobis(2,4,4-trimethylpentane); 2,2'-Azobis(N,N'-dimethyleneisobutyramidine)dihydrochloride; 2,2'-Azobis(2-amidinopropane) dihydrochloride; 4,4'-Azobis(4-cyanovaleriic acid) and combinations thereof.

6. The composition of claim 1, wherein the composition further comprises a chain transfer agent or the degradation products of the chain transfer agent.

7. The composition of claim 1, wherein the aqueous emulsion copolymer comprises at least one polymerized ethylenically unsaturated monomer selected from methyl acrylate, ethyl acrylate, butyl acrylate, 2-ethylhexyl acrylate, decyl acrylate, lauryl acrylate, methyl methacrylate, butyl methacrylate, isodecyl methacrylate, lauryl methacrylate, hydroxyethyl methacrylate, hydroxypropyl methacrylate, aminoalky (meth)acrylates, and combinations thereof; wherein the copolymer has a Tg of -50 to 60°C and wherein the composition is suitable for use when dry as a coating.

8. The composition of claim 1, wherein the aqueous emulsion copolymer is a multistage aqueous emulsion copolymer.

9. A method for making an aqueous emulsion copolymer and a coating composition comprising said aqueous emulsion copolymer, the method comprising:
providing an aqueous solvent;
providing a monomer X;
providing a monomer Y;
providing a polymerization initiator selected from 2,2'-Azobis(4-methoxy-2,4-dimethylvaleronitrile); 2,2'-Azobis(2,4-dimethyl-valeronitrile); 2,2'-Azobisisobutyronitrile; 2,2'-Azobis(2-methyl-butyronitrile); 1,1'-Azobis(1-cyclo-hexanecarbonitrile); 2,2'-Azobis(2,4,4-trimethylpentane); 2,2'-Azobis(N,N'-dimethyleneisobutyramidine)dihydrochloride; 2,2'-Azobis(2-amidinopropane) dihydrochloride; 4,4'-Azobis(4-cyanovaleriic acid) and combinations thereof;
combining the monomer X, the monomer Y, the polymerization initiator and the aqueous solvent forming a reaction mixture;
maintaining the pH of the reaction mixture at >= 7;
wherein the aqueous emulsion copolymer comprises > 5 wt% of monomer X derived units;
wherein monomer X is selected from polymerizable derivatives of imidazole, imidazoline, amidine, pyridine, pyrrole, pyrrolidine, pyrrolidinone, caprolactam, and combinations thereof; and,
wherein monomer Y is selected from carboxylic acids, carboxylic acid salts, carboxylic acid esters, organosulphuric acids, organosulphuric acid salts, sulphonic acids, sulphonic acid salts, phosphonic acids, phosphonic acid salts, vinyl esters, (meth)acrylamides, C8-C20 aromatic monomers containing at least one exocyclic ethylenic unsaturation and combinations thereof; and
combining the aqueous emulsion copolymer with an aqueous solution of a homopolymer comprising polymerized units of a monomer selected from polymerizable derivatives of imidazole, imidazoline, amidine, pyridine, pyrrole, pyrrilidone and caprolactam.

10. The method of claim 9, wherein the aqueous emulsion copolymer is a multistage aqueous emulsion copolymer.

## Patentansprüche

1. Wässrige Beschichtungszusammensetzung, umfassend:
i) Polymerteilchen von einem oder mehreren wässrigen Emulsionscopolymer(en), und
ii) von 0,05 Gewichts-% bis 20 Gewichts-% eines Homopolymers, umfassend polymerisierte Einheiten eines Monomers, ausgewählt aus polymerisierbaren Derivaten von Imidazol, Imidazolin, Amidin, Pyridin, Pyrrol, Pyrrolidon und Caprolactam, wobei das Gewichts-% auf Gewicht von Homopolymerfeststoffen zu Gewicht von Copolymerteilchenfeststoffen basiert;
und wobei das wässrige Emulsionscopolymer (i) polymerisierte Einheiten eines Monomers X, wobei Monomer X aus polymerisierbaren Derivaten von Imidazol, Imidazolin, Amidin, Pyridin, Pyrrol, Pyrrolidon, Caprolactam und Kombinationen davon ausgewählt ist, und eines oder mehrerer Monomere Y umfasst, wobei Monomer Y aus Carbonsäuren, Carbonsäuresalzen, Carbonsäureestern, Organoschwefelsäuren, Organoschwefelsäuresalzen, Sulfonsäuren, Sulfonsäuresalzen, Phosphonsäuren, Phosphonsäuresalzen, Vinylestern, (Meth)acrylamiden, aromatischen C₈-C₂₀ Monomeren, enthaltend mindestens eine exocyclische ethylenische Ungesättigtheit, und Kombinationen davon ausgewählt ist.

2. Zusammensetzung nach Anspruch 1, wobei die Zusammensetzung einen pH ≥ 7 aufweist.

3. Zusammensetzung nach Anspruch 1, wobei das wässrige Emulsionscopolymer > 5 bis 50 Gew.-% von Monomer X abgeleiteter Einheiten und 95 bis 50 Gew.-% von Monomer Y abgeleiteter Einheiten umfasst.

4. Zusammensetzung nach Anspruch 1, wobei die Zusammensetzung weiter einen Vernetzer umfasst.

5. Zusammensetzung nach Anspruch 1, wobei die Zusammensetzung weiter einen Polymerisationsstarter oder die Abbauprodukte des Polymerisationsstarters umfasst, wobei der Polymerisationsstarter aus 2,2'-Azobis(4-methoxy-2,4-dimethylvaleronitril); 2,2'-Azobis(2,4-dimethylvaleronitril); 2,2'-Azobisisobutyronitril; 2,2'-Azobis(2-methylbutyronitril); 1,1'-Azobis(1-cyclohexancarbonitril); 2,2'-Azobis(2,4,4-trimethylpentan); 2,2'-Azobis(N,N'-dimethylenisobutyramidin)dihydrochlorid; 2,2'-Azobis(2-amidinopropan)dihydrochlorid; 4,4'-Azobis(4-cyanovaleriansäure) und Kombinationen davon ausgewählt ist.

6. Zusammensetzung nach Anspruch 1, wobei die Zusammensetzung weiter ein Kettenübertragungsmittel oder die Abbauprodukte des Kettenübertragungsmittels umfasst.

7. Zusammensetzung nach Anspruch 1, wobei das wässrige Emulsionscopolymer mindestens ein polymerisiertes ethylenisch ungesättigtes Monomer umfasst, ausgewählt aus Methylacrylat, Ethylacrylat, Butylacrylat, 2-Ethylhexylacrylat, Decylacrylat, Laurylacrylat, Methylmethacrylat, Butylmethacrylat, Isodecylmethacrylat, Laurylmethacrylat, Hydroxyethylmethacrylat, Hydroxypropylmethacrylat, Aminoalkyl(meth)acrylaten und Kombinationen davon; wobei das Copolymer eine Tg von -50 bis 60°C aufweist und wobei die Zusammensetzung, wenn trocken, für die Verwendung als eine Beschichtung geeignet ist.

8. Zusammensetzung nach Anspruch 1, wobei das wässrige Emulsionscopolymer ein mehrstufiges wässriges Emulsionscopolymer ist.

9. Verfahren zum Herstellen eines wässrigen Emulsionscopolymers und einer Beschichtungszusammensetzung, umfassend das wässrige Emulsionscopolymer, wobei das Verfahren umfasst:
das Bereitstellen eines wässrigen Lösungsmittels;
das Bereitstellen eines Monomers X;
das Bereitstellen eines Monomers Y;
das Bereitstellen eines Polymerisationsstarters, ausgewählt aus 2,2'-Azobis(4-methoxy-2,4-dimethylvaleronitril); 2,2'-Azobis(2,4-dimethylvaleronitril); 2,2'-Azobisisobutyronitril; 2,2'-Azobis(2-methylbutyronitril); 1,1'-Azobis(1-cyclohexancarbonitril); 2,2'-Azobis(2,4,4-trimethylpentan); 2,2'-Azobis(N,N'-dimethylenisobutyramidin)dihydrochlorid; 2,2'-Azobis(2-amidinopropan)dihydrochlorid;
4,4'-Azobis(4-cyanovaleriansäure) und Kombinationen davon;
das Vereinigen des Monomers X, des Monomers Y, des Polymerisationsstarters und des wässrigen Lösungsmittels, wobei ein Reaktionsgemisch gebildet wird;
das Aufrechterhalten des pH des Reaktionsgemisches bei ≥ 7;
wobei das wässrige Emulsionscopolymer > 5 Gew.-% von Monomer X abgeleiteten Einheiten umfasst;
wobei Monomer X aus polymerisierbaren Derivaten von Imidazol, Imidazolin, Amidin, Pyridin, Pyrrol, Pyrrolidin, Pyrrolidinon, Caprolactam und Kombinationen davon ausgewählt ist; und,
wobei Monomer Y aus Carbonsäuren, Carbonsäuresalzen, Carbonsäureestern, Organoschwefelsäuren, Organoschwefelsäuresalzen, Sulfonsäuren, Sulfonsäuresalzen, Phosphonsäuren, Phosphonsäuresalzen, Vinylestern, (Meth)acrylamiden, aromatischen C₈-C₂₀ Monomeren, enthaltend mindestens eine exocyclische ethylenische Ungesättigtheit, und Kombinationen davon ausgewählt ist;
und
das Vereinigen des wässrigen Emulsionscopolymers mit einer wässrigen Lösung eines Homopolymers, umfassend polymerisierte Einheiten eines Monomers, ausgewählt aus polymerisierbaren Derivaten von Imidazol, Imidazolin, Amidin, Pyridin, Pyrrol, Pyrrolidon und Caprolactam.

10. Verfahren nach Anspruch 9, wobei das wässrige Emulsionscopolymer ein mehrstufiges wässriges Emulsionscopolymer ist.

## Revendications

1. Composition de revêtement aqueuse comprenant :
i) des particules de polymère d'un ou de plusieurs copolymères en émulsion aqueuse, et
ii) de 0,05 % en poids à 20 % en poids d'un homopolymère comprenant des unités polymérisées d'un monomère choisi parmi des dérivés polymérisables d'imidazole, d'imidazoline, d'amidine, de pyridine, de pyrrole, de pyrrolidone et de caprolactame, où le % en poids est rapporté au poids des solides d'homopolymère par rapport au poids des solides de particules de copolymère ; et dans laquelle le copolymère en émulsion aqueuse (i) comprend des unités polymérisées d'un monomère X, où le monomère X est choisi parmi des dérivés polymérisables d'imidazole, d'imidazoline, d'amidine, de pyridine, de pyrrole, de pyrrolidone, de caprolactame et des combinaisons de ceux-ci, et d'un ou plusieurs monomères Y, où le monomère Y est choisi parmi des acides carboxyliques, des sels d'acides carboxyliques, des esters d'acides carboxyliques, des acides organosulfuriques, des sels d'acides organosulfuriques, des acides sulfoniques, des sels d'acides sulfoniques, des acides phosphoniques, des sels d'acides phosphoniques, des esters vinyliques, des (méth)acrylamides, des monomères aromatiques en C₈-C₂₀ contenant au moins une insaturation éthylénique exocyclique et des combinaisons de ceux-ci.

2. Composition selon la revendication 1, dans laquelle la composition présente un pH ≥ 7.

3. Composition selon la revendication 1, dans laquelle le copolymère en émulsion aqueuse comprend > 5 à 50 % en poids d'unités dérivées du monomère X et de 95 à 50 % en poids d'unités dérivées du monomère Y.

4. Composition selon la revendication 1, dans laquelle la composition comprend de plus un agent de réticulation.

5. Composition selon la revendication 1, dans laquelle la composition comprend de plus un initiateur de polymérisation ou les produits de décomposition de l'initiateur de polymérisation, dans laquelle l'initiateur de polymérisation est choisi parmi le 2,2'-azobis(4-méthoxy-2,4-diméthylvaléronitrile) ; le 2,2'-azobis(2,4-diméthyl-valéronitrile) ; le 2,2'-azobisisobutyronitrile ; le 2,2'-azobis(2-méthyl-butyronitrile) ; le 1,1'-azobis(1-cyclo-hexanecarbonitrile) ; le 2,2'-azobis(2,4,4-triméthylpentane) ; le 2,2'-azobis(N,N'-diméthylèneisobutyramidine)dihydrochlorure ; le 2,2'-azobis(2-amidinopropane)dihydrochlorure ; le 4,4'-azobis(acide 4-cyanovalérique) et des combinaisons de ceux-ci.

6. Composition selon la revendication 1, dans laquelle la composition comprend de plus un agent de transfert de chaîne ou les produits de décomposition de l'agent de transfert de chaîne.

7. Composition selon la revendication 1, dans laquelle le copolymère en émulsion aqueuse comprend au moins un monomère éthyléniquement insaturé polymérisé choisi parmi l'acrylate de méthyle, l'acrylate d'éthyle, l'acrylate de butyle, l'acrylate de 2-éthylhexyle, l'acrylate de décyle, l'acrylate de lauryle, le méthacrylate de méthyle, le méthacrylate de butyle, le méthacrylate d'isodécyle, le méthacrylate de lauryle, le méthacrylate d'hydroxyéthyle, le méthacrylate d'hydroxypropyle, des (méth)acrylates d'aminoalkyle et des combinaisons de ceux-ci ; dans laquelle le copolymère présente une Tg de -50 à 60°C et dans laquelle la composition est utilisable lorsqu'elle est sèche comme un revêtement.

8. Composition selon la revendication 1, dans laquelle le copolymère en émulsion aqueuse est un copolymère en émulsion aqueuse multiétape.

9. Procédé de fabrication d'un copolymère en émulsion aqueuse et d'une composition de revêtement comprenant ledit copolymère en émulsion aqueuse, le procédé comprenant :
la fourniture d'un solvant aqueux ;
la fourniture d'un monomère X ;
la fourniture d'un monomère Y ;
la fourniture d'un initiateur de polymérisation choisi parmi le 2,2'-azobis(4-méthoxy-2,4-diméthylvaléronitrile) ; le 2,2'-azobis(2,4-diméthyl-valéronitrile) ; le 2,2'-azobisisobutyronitrile ; le 2,2'-azobis(2-méthyl-butyronitrile) ; le 1,1'-azobis(1-cyclo-hexanecarbonitrile) ; le 2,2'-azobis(2,4,4-triméthylpentane) ; le 2,2'-azobis(N,N'-diméthylèneisobutyramidine)dihydrochlorure ; le 2,2'-azobis(2-amidinopropane)dihydrochlorure ; le 4,4'-azobis(acide 4-cyanovalérique) et des combinaisons de ceux-ci ;
la combinaison du monomère X, du monomère Y, de l'initiateur de polymérisation et du solvant aqueux formant un mélange réactionnel ;
le maintien du pH du mélange réactionnel à ≥ 7 ;
dans lequel le copolymère en émulsion aqueuse comprend > 5 % en poids d'unités dérivées du monomère X ;
dans lequel le monomère X est choisi parmi des dérivés polymérisables d'imidazole, d'imidazoline, d'amidine, de pyridine, de pyrrole, de pyrrolidine, de pyrrolidinone, de caprolactame et des combinaisons de ceux-ci ; et,
dans lequel le monomère Y est choisi parmi des acides carboxyliques, des sels d'acides carboxyliques, des esters d'acides carboxyliques, des acides organosulfuriques, des sels d'acides organosulfuriques, des acides sulfoniques, des sels d'acides sulfoniques, des acides phosphoniques, des sels d'acides phosphoniques, des esters vinyliques, des (méth)acrylamides, des monomères aromatiques en C₈-C₂₀ contenant au moins une insaturation éthylénique exocyclique et des combinaisons de ceux-ci ; et
la combinaison du copolymère en émulsion aqueuse avec une solution aqueuse d'un homopolymère comprenant des unités polymérisées d'un monomère choisi parmi des dérivés polymérisables d'imidazole, d'imidazoline, d'amidine, de pyridine, de pyrrole, de pyrrolidinone et de caprolactame.

10. Procédé selon la revendication 9, dans lequel le copolymère en émulsion aqueuse est un copolymère en émulsion aqueuse multiétape.
